Europäisches Patentamt

European Patent Office

Office européen des brevets

(11) Veröffentlichungsnummer: **0 018 539**
A1

## (12) EUROPÄISCHE PATENTANMELDUNG

(21) Anmeldenummer: 80102012.4

(22) Anmeldetag: 15.04.80

(51) Int. Cl.³: **B 29 H 17/00**
B 60 C 5/00, B 60 C 9/14

(30) Priorität: 28.04.79 DE 2917347

(43) Veröffentlichungstag der Anmeldung:
12.11.80 Patentblatt 80 23

(84) Benannte Vertragsstaaten:
AT BE DE FR GB IT NL SE

(71) Anmelder: BAYER AG
ZENTRALBEREICH PATENTE, MARKEN UND LIZENZEN
D-5090 LEVERKUSEN 1, BAYERWERK(DE)

(72) Erfinder: Boden, Heinrich
Sperberweg 14
D-5090 Leverkusen 3(DE)

(72) Erfinder: Just, Gerhard
Finkenweg 2
D-5653 Leichlingen 1(DE)

(72) Erfinder: Knipp, Ulrich, Dr.
Haberlandstrasse 3
D-5060 Bergisch-Gladbach 2(DE)

(54) Faservliesarmierte Luftreifen und Verfahren zu deren Herstellung.

(57) Ein armierter Reifen aus Polyurethan kann in einem Arbeitsgang nach dem Reaktionsschleudergußverfahren erzeugt werden, wenn in die Form ein entsprechend vorgeprägtes Faservlies (1) eingebracht wird. Das Faservlies (1) wird zweckmäßigerweise im Fußbereich des Reifens mit den Wulstdrähten (5) verbunden. Eine zusätzliche Armierung (2) des Gürtels und der Flanken kann vorab an dem Faservlies befestigt werden; die Armierung wird vollständig mit Polyurethanharz umhüllt.

FIG 1

EP 0 018 539 A1

0018539

BAYER AKTIENGESELLSCHAFT 5090 Leverkusen,Bayerwerk

Zentralbereich Hö/bc
Patente, Marken und Lizenzen


Faservliesarmierte Luftreifen und Verfahren zu deren
Herstellung


Die Erfindung betrifft armierte Luftreifen aus Polyurethanelastomeren für Fahrzeuge aller Art sowie ein Verfahren zu deren Herstellung.

Polyurethanreifen mit einer Gürteleinlage unter der Lauffläche sind bekannt. Die Gürteleinlage bewirkt eine Versteifung des Reifens, besonders in Umfangsrichtung, es wird damit ein unzulässig starkes Umfangswachstum im Gebrauchszustand vermieden. Die Cordwicklungen aus Stahl, Glas oder Textil oder die Gewebeeinlagen sind direkt auf dem Reifenkern angebracht. Dabei zeigt sich, daß beim Aufblasen des Reifens die Windungen der Verstärkungseinlage aus dem Reifenmaterial ausreißen, da sie unmittelbar an ihren Innenflächen aufliegen und die Ummantelung mit dem Polyurethanelastomer keine ausreichende Haftung ergibt, um den auftretenden Kräften entgegenwirken zu können. In einer anderen Ausführungsform wird die Gürtel-


Le A 19 571

- 2 -

armierung durch Verwendung von Stegen oder Noppen, die durch entsprechende Ausbildung des Formkerns gebildet werden, von der Innenfläche des Reifens weiter entfernt fixiert. Die Markierungen, die sich zwangsläufig in der Reifeninnenkontur ausbilden, wirken sich jedoch nachteilig aus, sie können Kerbwirkungen hervorrufen und wegen der nicht glatten Oberfläche den Reifenschlauch durch Scheuern zerstören. Es ist auch die getrennte Herstellung von Lauffläche und Karkasse in verschiedenen Formwerkzeugen bekannt, wodurch das Einbetten der Gürtelarmierung in der neutralen Faser möglich ist. Jedoch ist die Herstellung eines solchen Reifens aufwendig und außerdem können Haftungsschwierigkeiten zwischen den Laufflächen und Karkassenmaterial auftreten.

Der Erfindung liegt die Aufgabe zugrunde, einen Luftreifen aus Polyurethanelastomeren derart zu armieren, daß sowohl Gürtelcordlagen als auch eine Radialarmierung vollkommen mit dem Polyurethanelastomeren verbunden sind. Daneben ist es eine Aufgabe der Erfindung, die Herstellung armierter Luftreifen aus Polyurethanelastomeren wirtschaftlicher zu gestalten.

Die Aufgabe wird verfahrensmäßig dadurch gelöst, daß um den Reifenkern ein vorgefertigtes torusförmiges Faservlies aufgebracht wird und durch Einbringen eines reaktionsgießfähigen Polyurethanelastomeren in die Form in einem Arbeitsgang der Reifen erzeugt wird. Gegenstand der Erfindung sind auch armierte Luftreifen aus Polyurethanelastomeren, gekennzeichnet durch ein vorgefertigtes torusförmiges Faservlies, das im Fußbereich des Reifens mit den Wulstdrähten verbunden ist.

Le A 19 571

Besonders vorteilhaft ist es, daß hochwertige Reifen in einem Arbeitsgang erhalten werden. An bzw. in dem Faservlies das in Stärken bis etwa 22 mm eingesetzt wird, lassen sich alle zusätzlich gewünschten Gürtel- und gegebenenfalls auch Flankenarmierungen befestigen. Durch das Vlies wird die gewünschte Lage der Armierung im Reifen fixiert. Die Armierung ist vollkommen von Polyurethanelastomeren ummantelt. Das Faservlies bewirkt von sich aus schon eine Verstärkung des Reifens, so daß beispielsweise auch ohne zusätzliche Flankenarmierung das Breitenwachstum des Reifens unter Belastung verringert ist. Durch das Faservlies wird auch das Defektverhalten des Reifens insbesondere in der stark beanspruchten Walkzone, verbessert. Es kann auf besondere Abstandshalter für die Umfangs- und Radialverstärkung vollkommen verzichtet werden, störende Markierungen an Reifeninnenseite sind nicht vorhanden. Faservliese in Schlauchform sind bekannt, sie bestehen bevorzugt aus Polyamid oder Polyester (dtex 7-70); sie haben ein Gewicht von 100 bis 600 $g/m^2$ und werden auf Rundvernadelungsmaschinen endlos hergestellt. Die abgelängten Faservliesschlauchstücke werden mit einem elastischen druckbeaufschlagbaren Balg in der Reifenform dreidimensional verformt; sie bilden einen torusförmigen durchlässigen Körper, der in seiner Innenkontur der Innenkontur des herzustellenden Reifens gleicht. Es kann zweckmäßig sein, das geformte Faservlies separat herzustellen und dann um den Reifenkern in der Reifenform zu legen. Beim Ausfüllen des Formhohlraums in der Reifenform werden Faservlies und gegebenenfalls die zusätzliche Cord- bzw. Gewebearmierung vom Polyurethanelastomer vollkommen durchtränkt und ummantelt.

Le A 19 571

Der Reifen wird am besten nach dem Reaktionsschleuderverfahren erzeugt. Geeignete Polyurethanelastomere sind bekannt. Es gelingt damit, das gesamte Reifenvolumen blasenfrei mit dem Harz zu füllen. Es kann zweckmäßig sein, das Faservlies mit Profilen auszubilden, es wird dadurch der Fließwiderstand herabgesetzt.

Der erfindungsgemäße Reifen und dessen Herstellung ist im folgenden weiter beispielhaft beschrieben und in der Zeichnung dargestellt. Es zeigen

Fig. 1  vorgeformtes Faservlies;

Fig. 2  Schnitt durch einen Luftreifen;

Fig. 3  Seitenansicht einer Vorrichtung zur Herstellung eines zylindrischen Faservlieses mit Wulstdrähten;

Fig. 4  Vorderansicht der Vorrichtung nach Fig. 3;

Fig. 5  zylindrisches Faservlies mit Wulstdrähten;

Fig. 6  torusförmig verformtes Faservlies nach Fig. 5;

Fig. 7  profiliertes Faservlies;

Fig. 8  anders profiliertes Faservlies;

Fig. 9  Form zur Herstellung der torusförmigen Vliesarmierung.

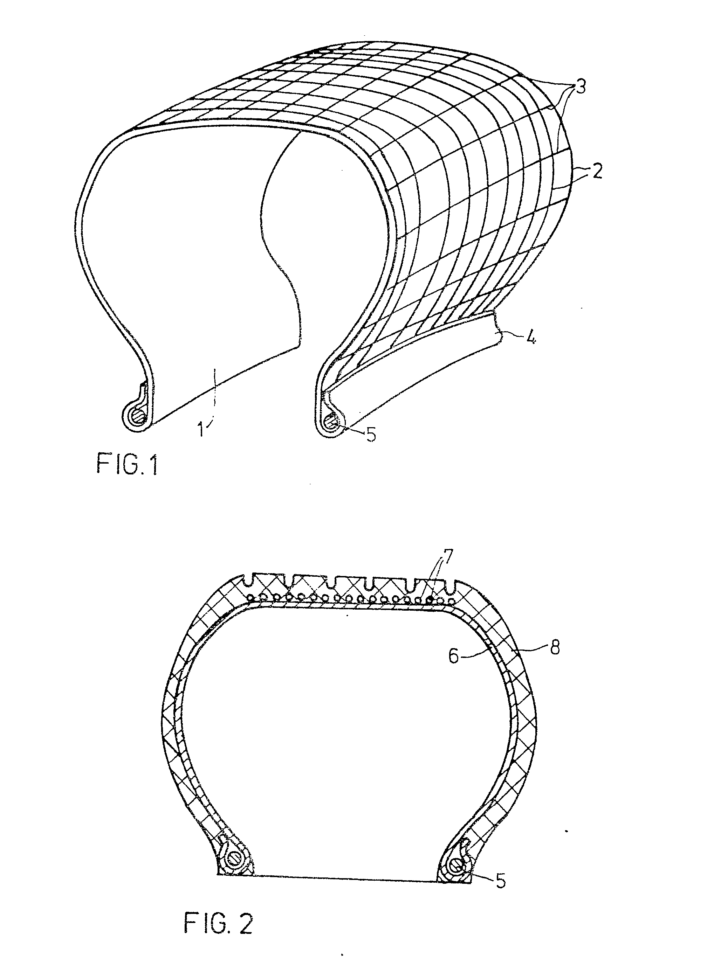

Fig. 1 zeigt einen Ausschnitt aus einem vorgefertigten torusförmigen Faservlies mit offenem Fuß. Das Faservlies 1 ist ein Endlosschlauch. Es ist mit einem Cord 2 (aus Stahl, Glas oder Kunstfaser) vernadelt. Zur Fixierung der Cordfäden zueinander dient der Kettfaden 3; er besteht aus einem elastischen Material, um eine Vergrößerung des Umfanges zuzulassen. Als Armierung kann aber auch das Faservlies 1 alleine eingesetzt werden. An der Seite 4 ist der Faservliesschlauch um den Wulstring 5 des Reifens geführt. Die Überlappung 4 kann verschweißt

Le A 19 571

oder verklebt werden; es läßt sich damit eine radiale Vorspannung der Cordfäden erzielen. Es wird dadurch beim Einsatz eines weicheren Polyurethanelastomers das Breitenwachstum des Reifens wesentlich verringert.

Fig. 2 zeigt einen Querschnitt durch einen in einem Arbeitsgang hergestellten geschleuderten Polyurethanreifen. Die Cordfäden 7 in Laufrichtung bzw. in radialer Richtung (nicht dargestellt) werden durch das Vlies 6 in der vorbestimmten Lage gehalten und sind völlig mit Polyurethanharz 8 umhüllt.

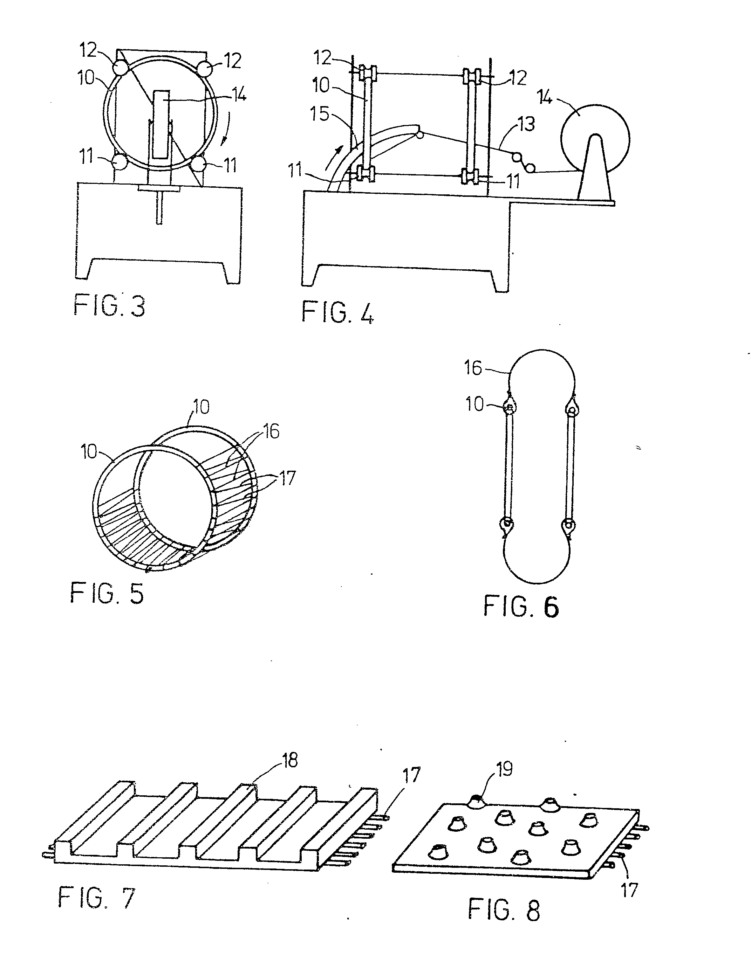

Die Herstellung des torusförmigen Faservlieses ist in den Figuren 3 bis 6 beispielhaft erläutert. Eine handelübliche Einwickelmaschine wird so umgerüstet, daß zwei Wulstringe 10, angepaßt an den Durchmesser des Reifenfußes, in einem Abstand, der der Abwicklung des Reifenquerschnittes verkleinert um einige Millimeter Abstand zur Reifeninnenkontur entspricht, geführt und kreisförmig bewegt werden. Das geschieht über 4 Rollenpaare, von denen die unteren 11 als Reibräder, die oberen 12 als Andruckrollen dienen. Die Armierung 13, die aus Geweben (Textil, Kunstfaser) in Bändchenform oder Cord (Stahl, Glas, Kunstfaser, Textil) bestehen kann, wird von der Wickelspule 14 über Umlenk- und Führungsrollen dem rotierenden Mitnehmer 15 zugeführt. Durch die Greifbewegungen des Mitnehmers 15 um die Wulstringe 10 wird die Armierung unter einstellbaren Bedingungen (Vorspannung, Abstand, Überlappung) um die im Abstand angeordneten Wulsringe doppellagig gewickelt. Man erhält in Fig. 5 dargestelltes zylinderförmiges Gebilde, um die Wulstringe 10 ist die

Le A 19 571

Armierung gewickelt. Im oberen Bereich ist eine Bändchenform 16, im unteren Bereich ist eine Cordarmierung 17 dargestellt. Damit die Armierung die richtige Lage im Reifen einnehmen kann, wird in einer Vorrichtung nach Fig. 3 und 4 über eine zweite Wickelspule (dort nicht dargestellt) ein Faservlies zugeführt, das somit primär als Abstandshalter wirkt. Es ist zweckmäßig, die Armierung durch ein Haftvermittlerbad zu führen, um die Fixierung der Armierung auf dem Vlies zu gewährleisten.

Die so hergestellten zylindrischen Körper nach Fig. 5, bei denen die Wulstringe 10 durch Verkleben, Verschweißen oder Nähen der Armierungslagen in Wulstbereich gegen ein Verrutschen während der anschließenden Manipulation üblicherweise noch gesichert sind, werden durch eine Verringerung des Abstands zwischen den beiden Wulstringen in einem torusförmigen, der Reifenkontur entsprechenden Körper verändert (Fig. 6). Ein solches vorgeformtes Vlies wird über den Reifenkern gelegt.

In den Figuren 7 und 8 ist dargestellt, daß zur Vermeidung erhöhter Fließwiderstände und damit zur besseren Durchtränkung der Armierung als Träger der Armierung auch profilierte Vliese oder Filze 18,19 eingesetzt werden können. Die Armierungsdrähte sind mit 17 bezeichnet.

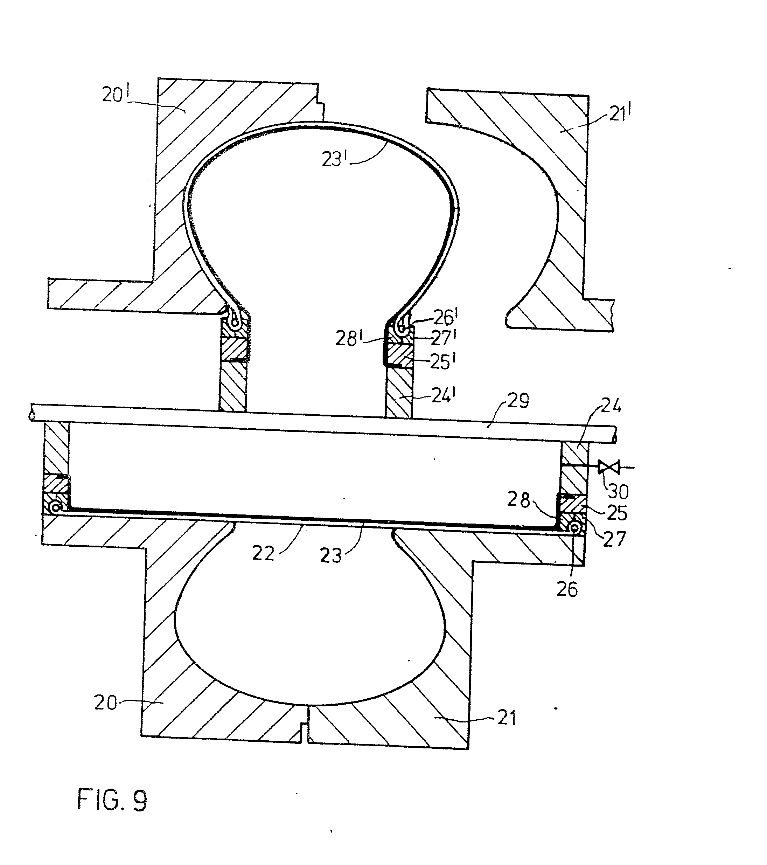

Fig. 9 zeigt eine zur Herstellung der Vliesarmierung geeignete Form 20,21. Im unteren Bereich der Abbildung liegt das Vlies noch in Schlauchform vor. Im oberen Teil der Abbildung ist durch den aufblasbaren Balg das Vlies entsprechend der Formkontur dreidimensional verformt. Einander entsprechende Elemente sind im oberen Bereich mit dem gleichen Bezugszeichen, aber mit einem Strich, versehen. Der Faservliesschlauch 22, dessen Länge durch die Abwicklung des Reifenquerschnitts von Wulst zu Wulst zusätzlich der beiden Überlappungen bestimmt ist, ist auf den elastischen Balg 23 gezogen, der zwischen die Ringscheiben 24,25 geklemmt ist. Die Faservliesschlauchenden sind um die Wulstringe 26 gelegt und in den Ringen 27,28 verspannt. Die Scheiben 24,25 bilden mit den Ringen 27,28 eine Einheit, die über die Führung 29 axial beweglich ist. Beim Zusammenfahren der Klemmscheiben 24,25,27,28 und gleichzeitiger Druckbeaufschlagung über das Ventil 30 wird der Balg 23, das Faservlies 22 gegen die Formwandung der Formhälften 20,21, die der Innenkontur des herzustellenden Reifens entsprechen, gepreßt. Bei diesem Vorgang wird der Faservliesschlauch 22 bleibend zu einem torusförmigen Körper 22' verformt.

Le A 19 571

- 8 -

Patentansprüche

1) Verfahren zur Herstellung von armierten Luftreifen aus Polyurethan, dadurch gekennzeichnet, daß um einen Reifenkern ein vorgefertigtes torusförmiges Faservlies aufgebracht wird und durch Einbringen eines reaktionsgießfähigen Polyurethanelastomeren in die Form in einem Arbeitsgang der Reifen erzeugt wird.

2) Verfahren nach Anspruch 1, dadurch gekennzeichnet, daß am Faservlies weitere Armierungseinlagen befestigt werden.

3) Armierter Luftreifen aus Polyurethanelastomeren, gekennzeichnet durch ein vorgefertigtes torusförmiges Faservlies (16,22), das im Fußbereich des Reifens mit den Wulstdrähten (5,10,26) verbunden ist.

4) Armierter Luftreifen nach Anspruch 3, dadurch gekennzeichnet, daß eine zusätzliche Gürtelarmierung (2,7) am Vlies befestigt ist.

5) Armierter Luftreifen nach Ansprüchen 3 und 4, dadurch gekennzeichnet, daß eine zusätzliche Flankenarmierung am Faservlies befestigt ist.

Le A 19 571

FIG.1

FIG. 2

FIG. 3

FIG. 4

FIG. 5

FIG. 6

FIG. 7

FIG. 8

FIG. 9

| EINSCHLÄGIGE DOKUMENTE | | KLASSIFIKATION DER ANMELDUNG (Int Cl³) |
|---|---|---|
| Kategorie | Kennzeichnung des Dokuments mit Angabe soweit erforderlich, der maßgeblichen Teile | betrifft Anspruch | |
| | DE - B - 1 196 363 (CONTINENTAL GUMMI WERKE)<br><br>* Spalte 1, Zeile 43 - Spalte 2, Zeile 46 *<br><br>-- | 1,3 | B 29 H 17/00<br>B 60 C 5/00<br>9/14 |
| | DE - A - 1 905 930 (DUNLOP)<br><br>* Seite 2, Absätze 1,2,4 *<br><br>-- | 1-3 | |
| | GB - A - 1 016 551 (DUNLOP)<br><br>* Seite 1, Zeilen 16-21 *<br><br>-- | 1-3 | RECHERCHIERTE SACHGEBIETE (Int Cl³) |
| | DE - A - 2 619 942 (PHOENIX GUMMI-WERKE)<br><br>* Anspruch 1 *<br><br>-- | 4 | B 29 H 17/00<br>B 60 C 5/00<br>9/02<br>9/14 |
| | US - A - 3 712 362 (S.W. ALDERFER)<br><br>* Spalte 3, Zeilen 8-21 *<br><br>-- | 4 | |
| | DE - A - 2 651 033 (BAYER)<br><br>* Anspruch 5 *<br><br>-- | 5 | |
| A | US - A - 3 956 448 (GOODYEAR) | | |
| A | DE - A - 1 605 684 (BAYER) | | |
| A | DE - A - 1 505 030 (BAYER) | | |
| A | DE - B - 1 301 045 (DU PONT) | | |
| A | DE - A - 2 355 308 (PHOENIX GUMMI WERKE)<br><br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 28-07-1980 | FRIDEN |

EPA form 1503.1 06.78